# EUROPÄISCHE PATENTSCHRIFT

(11) **EP 0 784 323 B1**
(45) Veröffentlichungstag und Bekanntmachung des Hinweises auf die Patenterteilung: **02.06.1999**
(21) Anmeldenummer: 97200052.5
(22) Anmeldetag: 09.01.1997
(51) Int. Cl.: G11B 33/04

(54) **Gehäuse**
Housing
Boîtier

(30) Priorität: 12.01.1996 DE 19600874; 24.05.1996 DE 19620983
(43) Veröffentlichungstag der Anmeldung: 16.07.1997
(73) Patentinhaber: Philips Patentverwaltung GmbH, 22335 Hamburg (DE); Koninklijke Philips Electronics N.V., 5621 BA Eindhoven (NL)
(72) Erfinder: Grobecker, Hermann, c/o Philips Patent. GmbH, 22335 Hamburg (DE); Wilhelm, Henning, c/o Philips Patent. GmbH, 22335 Hamburg (DE)
(74) Vertreter: von Laue, Hanns-Ulrich, Dipl.-Ing.

(56) Entgegenhaltungen:
- EP-A- 0 114 631
- DE-A- 3 425 579
- DE-A- 4 107 218
- DE-A- 4 210 826
- DE-U- 8 711 339
- US-A- 5 377 825

## Beschreibung

Die Erfindung bezieht sich auf ein Gehäuse mit einer auf einer Basisplatte angeordneten zentralen Halteanordnung für mindestens zwei aufeinanderliegende, mit einer Zentralöffnung versehene Informationsplatten, z.B. CD's.

Ein derartiges Gehäuse ist z.B. durch das DE-GM 87 11 339 bekannt geworden. Das bekannte Gehäuse besitzt ein Bodenteil, ein damit gelenkig verbundenes Deckelteil und ein in das Bodenteil einsetzbares Formteil mit einer kreisförmigen Vertiefung und einem in das Mittelloch von Informationsträgern eingreifenden Zapfen. Bei der bekannten Bauart ist die Tiefe der kreisförmigen Vertiefung und die Länge des Zapfens ein Mehrfaches des Dicke eines Informationsträgers. Ferner ist die kreisförmige Vertiefung mit einer gegenüber dem Boden des Bodenteils oder des Formteils erhöhten, an die Wand der kreisförmigen Vertiefung angrenzenden Randauflage versehen. Bei der bekannten Bauart ist der die Mittellöcher der aufeinanderliegenden Platten durchdringende Zapfen starr ausgebildet und besitzt rechtwinklig zur Oberfläche des Bodenteils verlaufende Flächen. Bei dieser bekannten Bauart besteht somit keine Möglichkeit, die aufeinanderliegenden Platten mit Hilfe des starren Zapfens durch Klemmung oder dergl. zu befestigen.

Der Erfindung liegt die Aufgabe zugrunde, die bekannte Bauart derart zu verbessern, daß durch eine besondere Gestaltung der zentralen Halteanordnung eine individuelle Klemmung der übereinanderliegenden Informationsträger möglich ist.

Diese Aufgabe wird gemäß der Erfindung bei einem Gehäuse der eingangs genannten Art dadurch gelöst,
a) daß die Halteanordnung aus kreisförmig angeordneten, in die Zentralöffnungen eingreifenden, radial federnden Klemmstegen gebildet ist und
b) daß mindestens zwei Gruppen von unabhängigen Klemmstegen mit jeweils in unterschiedlichen Ebenen angeordneten Klemmflächen zur Klemmung jeweils eines Informationsträgers vorgesehen sind.

Auf diese Weise ist es möglich, jeden der übereinanderliegenden, plattenförmigen Informationsträger individuell für sich durch Klemmwirkung der speziell ausgestalteten Klemmstege zu befestigen, ohne daß dabei die Klemmstege der einen Gruppe die Klemmwirkung einer anderen Gruppe beeinträchtigen oder stören. Ein Herausfallen der Informationsträger bei geöffnetem Deckel ist somit vermieden, ferner verhindert die Einzelklemmung der Informationsträger weitgehend eine kreisförmige Bewegung der Informationsträger beim Transport, wie dies z.B. bei der oben genannten bekannten Bauart möglich ist, bei der die Informationsträger lose auf den Zapfen geschoben sind. Werden als Informationsträger z.B. handelsübliche CD-Platten verwendet, so wird ein "Kleben" von mehreren aufeinanderliegenden Platten dadurch verhindert, daß die handelsüblichen CD-Platten zur Zeit an ihrer Laser-Ausleseseite mit einem vorstehenden, der Zentralöffnung benachbarten Ring versehen sind. Die Abstände der die Klemmflächen enthaltenden Ebenen sind dabei der Dicke der zu klemmenden Informationsträger angepaßt, d.h. einschließlich der gegebenenfalls vorhandenden Ringe.

Um bei einer Anordnung von mehreren Informationsplatten ein Durchbiegen der unten liegenden Informationsplatte, die mit einem derartigen Ring versehen ist, zu verhindern, wird in Ausgestaltung der Erfindung vorgeschlagen, daß die sonst ebene untere Auflagefläche der Basisplatte im Randbereich mit einer Erhöhung versehen ist, deren Höhe gleich ist der Höhe des an dem Informationsträger vorhandenen Ringes.

Eine kerbartige Verklemmung zwischen der Informationsplatte und den Klemmstegen erfolgt in weiterer Ausgestaltung der Erfindung dadurch, daß die jeweils in einer besonderen Ebene liegenden Klemmflächen in Richtung auf die Basisplatte derart verjüngt ausgebildet sind, daß der größte Außendurchmesser der kreisförmig angeordneten Klemmflächen etwas größer ist als der Durchmesser der Zentralöffnung der jeweils geklemmten Informationsplatte.

Um eine gegenseitige Beeinflussung der Klemmstege der verschiedenen Gruppen zu verhindern, ist in weiterer Ausgestaltung der Erfindung vorgesehen, daß die an die Klemmflächen einer Gruppe angrenzenden Flächen der Klemmstege rechtwinklig zur Basisplatte verlaufen und daß deren Außendurchmesser etwas kleiner ist als der Durchmesser der Zentralöffnungen der Informationsplatten.

Eine verbesserte Trennung zwischen den einzelnen Klemmebenen wird ferner dadurch erreicht, daß am Ende der Klemmflächen einer Gruppe von Klemmstegen radiale Verdickungen vorgesehen sind, deren Durchmesser etwas größer ist als der Durchmesser der Zentralöffnungen der Informationsträger. Beim Aufsetzen einer Informationsplatte auf die Klemmstege werden dabei infolge dieser Verdickungen die entsprechenden Klemmstege etwas einwärts gedrückt und schnappen danach in ihre Klemmlage zurück, nachdem der Informationsträger seine Klemmlage erreicht hat.

In weiterer Ausgestaltung der Erfindung ist vorgesehen, daß bei zwei oder mehr Gruppen von unterschiedlichen Klemmstegen die Klemmstege der einzelnen Gruppen nacheinander abwechselnd am kreisförmigen Umfang verteilt angeordnet sind. Zu einer wirksamen Klemmung sind mindestens drei am Umfang gleichmäßig verteilte Klemmstege für jeweils eine Gruppe erforderlich. Sind z.B. insgesamt zwölf Klemmstege vorhanden, so könnten maximal vier plattenförmige Informationsträger mit jeweils drei am Umfang gleichmäßig verteilten Klemmstegen individuell für sich zuverlässig und sicher geklemmt und gehalten werden. Sollen bei insgesamt zwölf vorhandenen Klemmstegen drei Informationsplatten aufgenommen werden, so sind für jede Platte vier Klemmstege vorgesehen, während bei Aufnahme von zwei Informationsplatten jeweils sechs Klemmstege für eine Platte zur Verfügung stehen.

Die Erfindung ist vorteilhaft anwendbar bei einem handelsüblichen Gehäuse mit einem Bodenteil, einem daran schwenkbar befestigten Deckelteil und einem in das Bodenteil einsetzbaren Tray, wobei das Tray bei einem sonst unveränderten Gehäuse als Basisplatte mit der oben genannten erfindungsgemäßen zentralen Halteanordnung ausgebildet ist. Je nach Ausgestaltung des bekannten Trays ist es somit möglich, bei gleicher Ausbildung des Bodenteiles und des Deckelteiles des bekannten handelsüblichen Aufnahmegehäuses maximal drei plattenförmige Informationsträger in dem Gehäuse unterzubringen, ohne daß dessen Außenabmessungen geändert werden müßten. Dies bedeutet eine große Platzersparnis gegenüber dem bekannten Gehäuse, welches nur einen Informationsträger aufnehmen konnte.

In einer ersten Ausgestaltung wird dabei das bisher bekannte Tray unter Wegfall der erhöhten Mittenauflage mit einer ebenen Auflagefläche für den unten liegenden Informationsträger und mit einer ebenfalls ebenen Außenfläche zur Auflage im Bodenteil des Gehäuses versehen. Ohne weitere Änderungen des Trays oder des Gehäuses ergibt sich damit ein Raumgewinn, so daß zuverlässig zwei Informationsträger individuell geklemmt werden können, wobei gleichzeitig der bisher oberhalb der Halteanordnung vorhandene Raum für ein Textheft in unveränderter Größe beibehalten werden kann.

Eine zweite Ausgestaltung besteht darin, daß zusätzlich zu den genannten Änderungen des Trays die Klemmstege der Halteanordnung in Richtung auf das Deckelteil verlängert werden. Bei dieser Ausführung können dann drei Informationsplatten zuverlässig geklemmt werden, jedoch verringert sich bei unveränderter Ausbildung der Außenabmessungen des Gehäuses der Raum zur Aufnahme des Textheftes zwischen den Klemmstegen und dem Deckel.

Eine weitere Anwendungsmöglichkeit der Erfindung ergibt sich bei einem handelsüblichen Gehäuse mit einem Bodenteil und einem daran schwenkbar befestigten Deckelteil, wobei das Bodenteil bei sonst unveränderten Abmessungen des Gehäuses als Basisplatte mit der oben beschriebenen erfindungsgemäßen zentralen Halteanordnung ausgebildet ist und wobei die von dem Bodenteil ausgehenden Klemmstege bis kurz unter das Deckelteil ragen. Bei einer derartigen Ausgestaltung der Erfindung können in dem Gehäuse, welches bisher nur einen Informationsträger aufnehmen konnte, maximal vier Informationsträger übereinander, individuell geklemmt, untergebracht werden, ohne daß die Abmessungen des Außengehäuses, d.h. des Bodenteiles oder des Deckelteiles, geändert werden müssen. Eine derartige Ausgestaltung der Erfindung ist z.B. vorteilhaft als Lagerverpackung für Datenträger, die keine besondere Texteinlage benötigen, da eine solche Texteinlage wegen des nunmehr verringerten Raumes zwischen Deckelteil und Oberkante der Halteanordnung nicht mehr untergebracht werden kann.

Beim Transport derartiger Gehäuse mit z.B. vier Informationsträgern auf ein und derselben Klemmanordnung lassen sich mitunter Stoßbeanspruchungen nicht vermeiden, so daß möglicherweise der oben liegende Informationsträger von der Halteanordnung gelöst wird. Auch kann es vorkommen, daß bei mehrfachen Stoßbeanspruchungen ein oder mehrere Klemmelemente abbrechen. Dies bedeutet, daß die Informationsträger evtl. nicht mehr sicher gehalten werden können.

Durch die DE 34 25 579 C2 ist eine Aufbewahrungskassette für plattenförmige Informationsträger, z.B. für CD's, bekannt geworden, bei welcher die zentrische Halteanordnung radial federnde Klemmstege aufweist, die zur Halterung einer einzigen CD ausgebildet sind. Um dort ein Lösen der CD, z.B. infolge einer Stoßbeanspruchung, zu verhindern, sind die Enden der Klemmstege durch eine Druckplatte fest verbunden, wobei diese so gestaltete Halteanordnung in Abhängigkeit ihrer elastischen Verformung bei einer Druckbelastung der Druckplatte in ihrem Durchmesser verringert ist und wobei die Haltestege mit Halte- bzw. Rastnocken versehen sind, über welche die Halteanordnung den abgelegten Informationsträger in seinem Mittellochrandbereich im Formschluß fixiert. Durch eine derartige Gestaltung kann die in das Mittelloch der Informationsplatte eingreifende Halteanordnung leicht in ihrem Durchmesser verringert werden. Auf diese Weise kann der Informationsträger unter leichtem Druck auf der Halteanordnung abgelegt werden, wobei ein sicherer Formschluß zwischen der Halteanordnung und der Informationsplatte erzielt werden kann. Umgekehrt kann die Informationsplatte jedoch nur durch Ausüben eines leichten Druckes auf die Druckplatte gelöst werden, wobei der Durchmesser der Halteanordnung verringert wird und die Platte somit gelöst werden kann. Dieser Effekt kann bei der bekannten Bauart noch dadurch verbessert werden, daß die Klemmstege über ein Wellenprofil aufweisende Verbindungsstege an der Druckplatte befestigt sind.

Um ein eventuell mögliches Lösen einer Informationsplatte von der Halteanordnung bei derartigen Gehäusen mit mehreren Informationsplatten zu vermeiden, wird in Ausgestaltung der Erfindung vorgeschlagen, daß mindestens ein Teil der Klemmstege unter Beibehaltung ihrer radialen Federung an den freien Enden fest miteinander verbunden ist. Hierbei handelt es sich im Prinzip um die Anwendung der oben beschriebenen, an sich bekannten Bauart auf ein Gehäuse, bei welchem die Halteanordnung mindestens zwei Informationsplatten aufnehmen kann. Dies ist bei derartigen Halteanordnungen besonders vorteilhaft, da diese Halteanordnungen für jede der zu haltenden Informationsplatten im allgemeinen weniger Klemmelemente zur Halterung einer einzigen Informationsplatte besitzen und somit störanfälliger sind als solche Halteanordnungen, die nur eine einzige Informationsplatte halten und somit mehr Klemmelemente für diese Informatiosplatte aufweisen. Auch wird durch die erfindungsgemäße Ausgestaltung die Bruchgefahr für die Klemmstege bei Stoßbeanspruchungen vermindert.

Da die oben liegende Informationsplatte im Hinblick auf ein Lösen von der Halteanordnung am gefährdetsten ist, ist in Ausgestaltung der Erfindung vorgesehen, daß die Klemmstege der Gruppe mit den am weitesten außen liegenden Klemmflächen miteinander verbunden sind. Dies bedeutet, daß die oben liegende Informationsplatte somit besonders gesichert ist und daher auch einen Halt für die darunter liegenden Informationsplatten darstellt.

In Ausgestaltung der Erfindung ist vorgesehen, daß die Klemmstege über elastische Verbindungsstege mit einer Platte verbunden sind. Diese elastischen Verbindungsstege ermöglichen ein einfaches Aufsetzen der Informationsplatten, wobei die Klemmstege nach radial innen ausweichen und nach erfolgtem Aufsetzen wieder zurückschnappen, so daß die radial außen liegenden Klemmflächen an den Wänden der Innenbohrung der Informationsplatten anliegen. Ein Lösen erfolgt in umgekehrter Reihenfolge, wobei ein leichter Druck auf die Platte ausgeübt wird. Anstelle der Platte könnte auch ein Ring verwendet werden.

In Ausgestaltung der Erfindung ist vorgesehen, daß die elastischen Verbindungsstege ein Well- oder S-Profil aufweisen. Diese Profile sind einfach herstellbar und ermöglichen auf einfache Weise eine elastische Verbindung zwischen den Klemmstegen und der Platte bzw. dem Ring.

Eine einfache Herstellung erfolgt in weiterer Ausgestaltung der Erfindung dadurch, daß die Klemmstege, gegebenenfalls einschließlich der elastischen Verbindungsstege, mit der Platte einteilig ausgebildet sind.

Eine Verbesserung der Qualität der Halteanordnung wird dadurch erzielt, daß mindestens die Klemmstege einer Gruppe miteinander verbunden sind. Eine derartige Bauweise gibt der gesamten Halteanordnung bereits die erforderliche Stabilität. Dies ist vorzugsweise, wie bereits oben erwähnt, die Gruppe, deren Klemmflächen axial am weitesten von der Grundfläche des Gehäuses entfernt liegen.

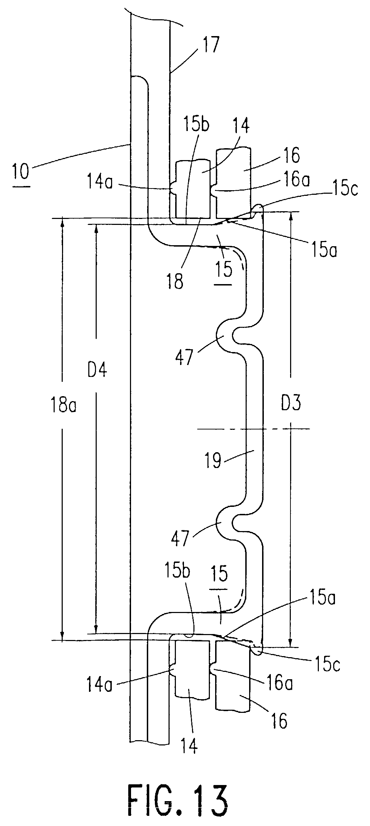

In der Zeichnung sind in den Fig. 1 bis 13 Ausführungsbeispiele des Gegenstandes gemäß der Erfindung schematisch dargestellt.
Fig. 1 zeigt eine Draufsicht auf ein Tray mit einer zentralen Halteanordnung für mehrere CD's, wobei keine CD's eingsetzt sind,
Fig. 2 zeigt einen vergrößerten Schnitt gemäß A-A nach Fig. 1 mit zwei gehaltenen CD's,
Fig. 3A und B zeigen zwei vergrößerte, schematische Darstellungen des Klemmbereiches zur Klemmung von zwei CD's,
Fig. 4 zeigt im Schnitt eine Seite eines Aufnahmegehäuses zur Aufnahme von zwei CD's,
Fig. 5 zeigt das gleiche Gehäuse gemäß Fig. 4, in welchem jedoch nunmehr drei CD's untergebracht sind,
Fig. 6 zeigt das gleiche Gehäuse gemäß Fig. 4, in welchem nunmehr vier CD's untergebracht sind,
Fig. 7 bis 9 zeigen kreisförmig angeordnete Klemmstege gemäß Fig. 4 bis 6,
Fig. 10 zeigt im Schnitt eine Seite eines Aufnahmegehäuses zur Aufnahme von sechs CD's,
Fig. 11 zeigt das vollständige Gehäuse gemäß Fig. 10,
Fig. 12 zeigt eine vergrößerte Halteanordnung gemäß Fig. 1 mit einer zwischen Klemmstegen angeordneten Platte, und
Fig. 13 zeigt einen Schnitt B-B gemäß Fig. 12.

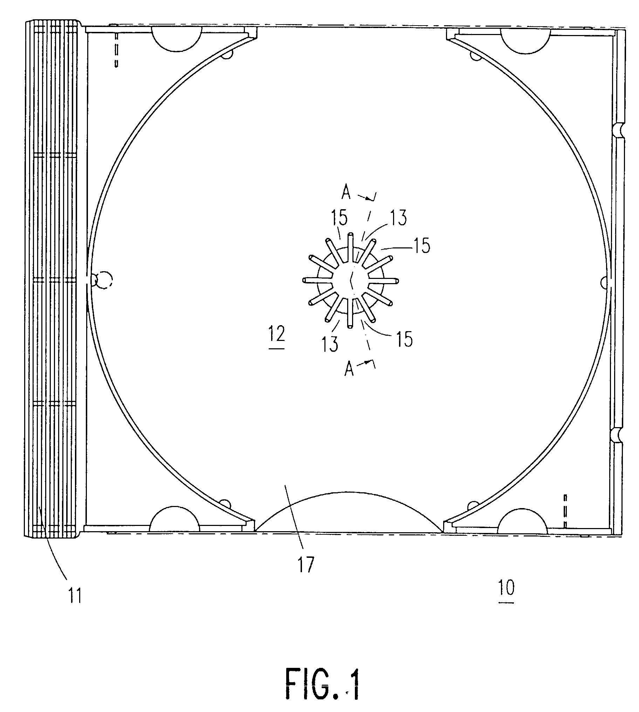

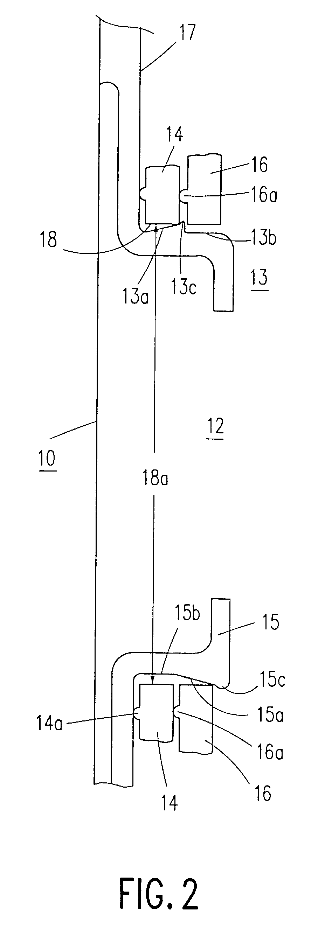

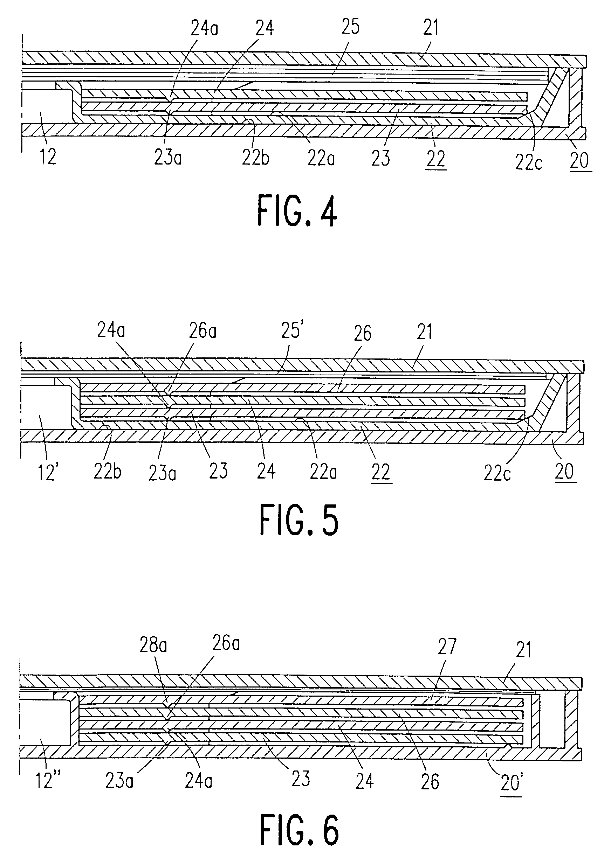

Das in Fig. 1 dargestellte Tray 10 wird normalerweise in ein Bodenteil eines Aufnahmegehäuses eingesetzt, welches sodann mit einem am Bodenteil gelenkig angeordneten Deckelteil verschließbar ist. Derartige Gehäuse sind weiter unten schematisch in den Fig. 4 bis 6 dargestellt. Das Tray 10 gemäß Fig. 1 besitzt eine Grifflasche 11 und eine zentrale Halteanordnung 12. Die Halteanordnung 12 enthält gemäß Fig. 1 und 2 zwei Gruppen von kreisförmig angeordneten Klemmstegen, und zwar eine erste Gruppe von sechs Klemmstegen 13 zur Halterung und Klemmung einer ersten CD 14 und eine zweite Gruppe von sechs Klemmstegen 15 zur Halterung und Klemmung einer zweiten CD 16. Die Klemmstege 13 und 15 sind abwechselnd am Umfang der Halteanordnung 12 angeordnet.

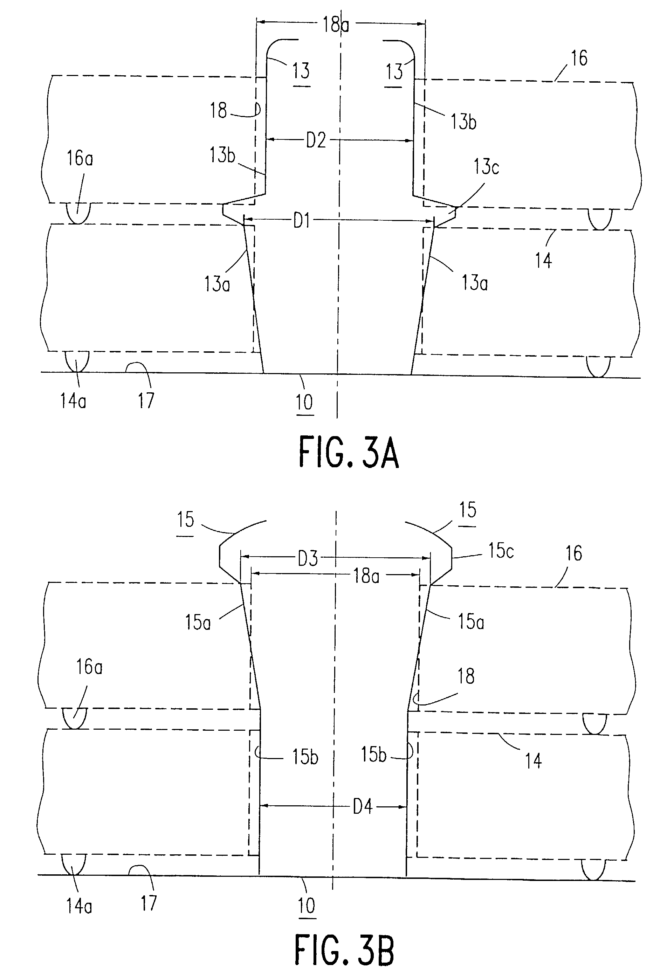

Fig. 3A zeigt einen nicht maßstabsgetreuen Schnitt durch zwei gegenüberliegende Klemmstege 13 der ersten Gruppe. Diese besitzen der Oberfläche 17 des Trays 10 benachbarte Klemmflächen 13a, die sich konisch in Richtung auf die Oberfläche 17 hin verjüngen. Der maximale Außendurchmesser D₁ dieser Klemmflächen 13a ist im nicht geklemmten Zustand etwas größer als der Durchmesser 18a der Zentralöffnung 18 der CD's 14 oder 16. Dagegen ist der Außendurchmesser D₂ der oberhalb der Klemmflächen 13a liegenden geraden Flächen 13b der Klemmstege 13 kleiner als der Durchmesser 18a der Zentralöffnung 18, so daß diese Flächen 13b der Klemmung der zweiten CD 16 nicht im Wege stehen. Zwischen den Flächen 13a und 13b ist eine radiale Verdickung 13c vorgesehen, deren Durchmesser größer ist als der Durchmesser der Zentralöffnung 18. Diese Verdickung 13c dient zur Verbesserung des Sitzes der CD 14.

Fig. 3B zeigt einen schematischen Schnitt durch zwei gegenüberliegende Klemmstege 15 der zweiten Gruppe. Auch die radial federnden Klemmstege 15 besitzen konisch in Richtung auf die Oberfläche 17 des Trays 10 sich verjüngende Klemmflächen 15a und daran sich anschließende, rechtwinklig zur Oberfläche 17 ausgerichtete Flächen 15b. Die Klemmflächen 15a dienen hier zur Klemmung der auf der CD 14 liegenden CD 16. Für die Abmessungen der Durchmesser der konischen Klemmflächen 15a und der geraden Flächen 15b gilt entsprechend das gleiche wie bei den oben beschiebenen Flächen 13a und b, d.h. der größte Außendurchmesser D₃ der Klemmflächen 15a ist etwas größer als der Durchmesser 18a der CD-Zentralöffnung 18. Ferner ist der Außendurchmesser D₄ der geraden Flächen 15b etwas kleiner als der Durchmesser 18a. Oberhalb der CD 16 besitzen die Klemmstege 15 eine radiale Verdickung 15c, die dazu dient, die über die Verdickung 15c hinweg geschobene CD 16 in ihrem Sitz zu verankern. Das in Fig. 1 bis 3 dargestellte Tray 10 besitzt an seiner Oberfläche 17 keinerlei Erhöhung mehr für die Auflage von CD's, wie dies bei den üblichen Trays der Fall war. Vielmehr liegt die untere CD 14 mit einem Ring 14a direkt auf der Oberfläche 17 und die CD 16 mit einem Ring 16a auf der CD 14.

Die Fig. 4, 5 und 6 zeigen drei Ausführungsbeispiele eines einzigen Gehäuses mit den gleichen Außenabmessungen, welches gemäß Fig. 4 und 5 ein gleiches Bodenteil 20 und ein damit gelenkig verbundenes Deckelteil 21 aufweist. Das Bodenteil 20' gemäß Fig. 6 ist im Innenaufbau abgewandelt (siehe unten). Dieses Gehäuse gemäß Fig. 4 bis 6 entspricht in seinen Außenabmessungen der handelsüblichen CD-Verpackung zur Aufnahme einer einzigen CD. Gemäß dem Ausführungsbeispiel nach Fig. 4 unterscheidet sich dieses Ausführungsbeispiel von der handelsüblichen Ausbildung des Gehäuses dadurch, daß das im Bodenteil angeordnete Tray 22 unter Wegfall einer erhöhten Mittenauflage eine ebene Auflagefläche 22a besitzt für die CD 23, wodurch Raum gewonnen wird, zwei CD's 23 und 24 unterzubringen, die mit vorstehenden Ringen 23a, 24a versehen sind. Ein weiterer Raumgewinn ergibt sich dadurch, daß gegenüber der bisher bekannten Ausführung das Tray 22 nunmehr direkt mit einer ebenen Fläche 22b auf dem Bodenteil 20 aufliegt. Der Raum für ein Textheft 25 ist ausreichend groß bemessen. Die Halteanordnung 12 ist, was hier nicht im einzelnen dargestellt ist, gemäß Fig. 1 bis 3 erfindungsgemäß ausgestaltet. Die Höhe der Halteanordnung 12 ist gegenüber der bekannten Ausführung der handelsüblichen Gehäuseform nicht verändert.

Die Ausführungsform gemäß Fig. 5 unterscheidet sich von der bekannten handelsüblichen Bauform des Gehäuses dadurch, daß, wie in Fig. 4, das Tray 22 nach Wegfall einer erhöhten Mittenauflage mit einer ebenen Auflagefläche 22a für die unten liegende CD 23 ausgebildet ist und ebenfalls mit einer ebenen Außenfläche 22b direkt auf dem Bodenteil 20 aufliegt. Zusätzlich ist bei dieser Bauweise die Halteanordnung 12' nach oben in Richtung auf das Deckelteil 21 verlängert, so daß nunmehr Platz zur Aufnahme einer weiteren CD 26 vorhanden ist, wobei jedoch der Raum zur Aufnahme des nunmehr verkleinerten Textheftes 25' verkleinert wurde.

Das Ausführugsbeispiel gemäß Fig. 6 unterscheidet sich von dem handelsüblichen Gehäuse ebenfalls nicht in seinen Außenabmessungen, jedoch ist bei dieser Bauweise kein besonderes Tray vorgesehen, vielmehr ist hierbei das Bodenteil 20' selbst mit der Halteanordnung 12" versehen, die bis unmittelbar unter das Deckelteil 21 ragt. Auf diese Weise ergibt sich ausreichend Platz zur Aufnahme von vier CD's 23, 24, 26, 27 in einem Gehäuse, das bisher nur für eine CD ausgelegt war. Die Halteanordnung 12" ist wiederum entsprechend Fig. 1 bis 3 erfindungsgemäß mit federnden Klemmstegen versehen, und zwar in diesem Ausführungsbeispiel mit vier Gruppen von jeweils mindestens drei Klemmstegen.

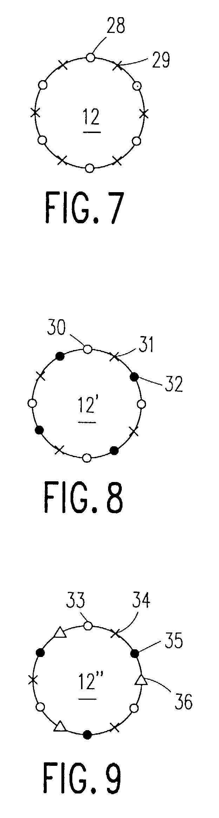

In Fig. 7 bis 9 sind schematisch die Klemmanordnungen 12, 12', 12" gemäß Fig. 4 bis 6 mit jeweils zwölf Klemmstegen dargestellt. Die Bauart gemäß Fig. 7 besitzt zwei Gruppen von jeweils sechs Klemmstegen 28, 29 zur Halterung von zwei CD's, entsprechend dem Ausführungsbeispiel nach Fig. 3A und B. Die Bauart gemäß Fig. 8 besitzt drei Gruppen von jeweils vier Klemmstegen 30 bis 32 zur Halterung von drei CD's, und die Bauart gemäß Fig. 9 besitzt vier Gruppen von jeweils drei Klemmstegen 33 bis 36 zur Halterung von vier CD's.

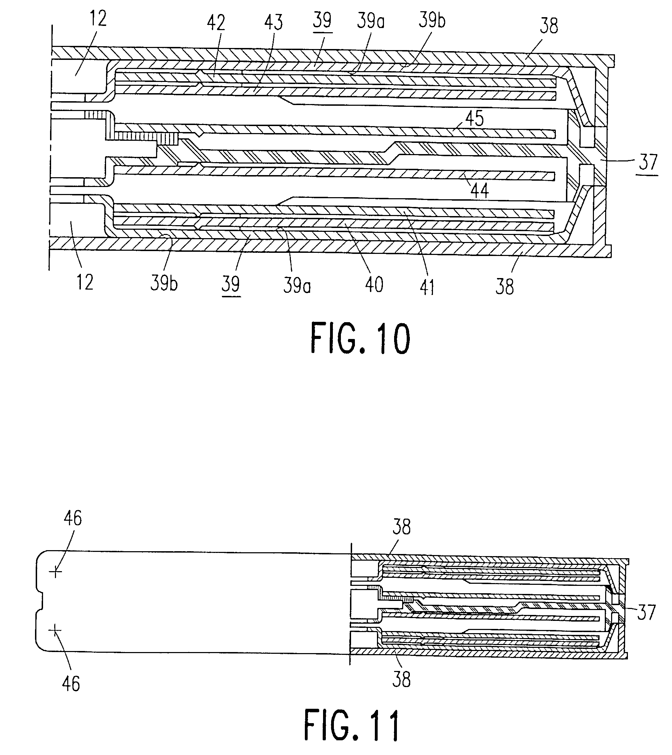

Fig. 10 zeigt die rechte Seite eines Aufnahmegehäuses für insgesamt sechs CD's. Das Gehäuse besitzt ein Mittelteil 37 und zwei gleichartig ausgebildete Deckelteile 38, die am Mittelteil gelenkig angeordnet sind. Die Gelenke für die Deckel 38 sind, genau wie bei den Ausführungsbeispielen nach Fig. 4 bis 6, in dem in Fig. 11 dargestellten linken Teil des Gehäuses angeordnet. Das Gehäuse gemäß Fig. 10 entspricht in seinen Außenabmessungen unverändert dem entsprechenden handelsüblichen Gehäuse, welches bisher lediglich zur Aufnahme von vier CD's geeignet war, und zwar von jeweils einer CD an den Deckelteilen 38 und von zwei CD's an dem Mittelteil 37. Erfindungsgemäß ist nunmehr dieses Gehäuse so ausgebildet, daß die beiden gleichartigen Deckelteile 38 entsprechend der Bauweise nach Fig. 4 ausgebildet sind. Dies bedeutet, daß die beiden Deckelteile 38 jeweils ein Tray 39 aufnehmen, welches unter Wegfall einer erhöhten Mittenauflage eine ebene Auflagefläche 39a aufweist und ebenfalls mit einer ebenen Auflagefläche 39b auf dem jeweiligen Deckelteil 38 aufliegt. Dadurch wird so viel Raum gewonnen, daß nunmehr in jedem Deckelteil 38 zwei CD's 40, 41 bzw. 42, 43 untergebracht werden können. Wie bei dem bisher bekannten Gehäuse können in hergebrachter Weise an dem Mittelteil 37 zwei weitere CD's 44, 45 untergebracht werden, so daß das Gehäuse insgesamt nunmehr sechs CD's aufnehmen kann. Die mittig angeordnete Klemmanordnung 12 eines jeden Deckelteiles ist wie bei der Bauart gemäß Fig. 4 bzw. 7 ausgebildet, d.h. jede der Klemmanordnungen 12 besitzt zwei Gruppen von Klemmstegen 28, 29 zur Halterung von jeweils zwei CD's.

Fig. 11 zeigt die Bauart gemäß Fig. 10, wobei hier der linke Teil des Gehäuses mit den beiden Scharniereinrichtungen 46 für die Deckelteile 38 eingezeichnet ist. Entsprechend sind auch die Gehäuse gemäß Fig. 4, 5, 6 in ihren linken Teilen ausgebildet.

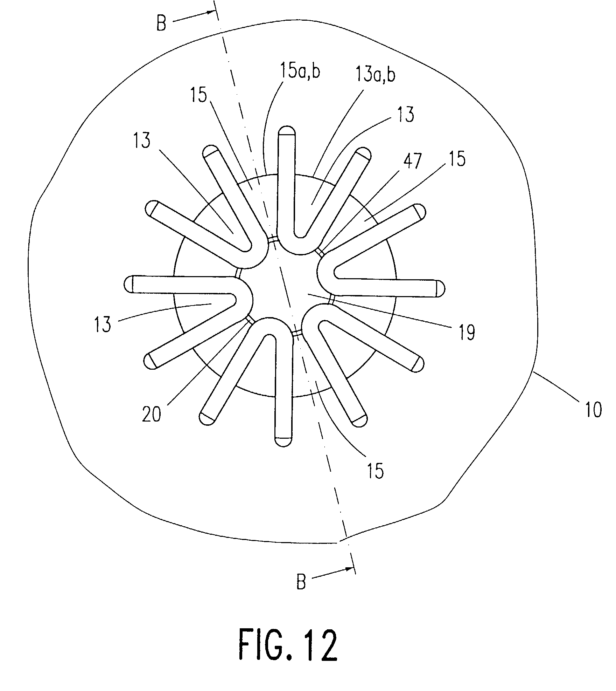

Gemäß Fig. 12 sind die Klemmstege 15 der zweiten Gruppe durch eine starre Platte 19 miteinander verbunden, wobei zwischen den freien Enden der Klemmstege 15 und der Platte 19 S-förmige Verbindungsstege 47 zur Herstellung einer Elastizität vorgesehen sind.

Beim Einsetzen der ersten CD 14 werden zunächst die Klemmelemente 15 zusammengedrückt, und danach wird die CD 14 von den Klemmflächen 13a der Klemmelemente 13 gehalten. Danach wird die zweite CD 16 eingesetzt, wobei die Klemmelemente 13 nicht betätigt, sondern lediglich die Klemmelemente 15 einwärts gebogen werden, so daß die CD 16 nach dem Einsetzvorgang von den Klemmflächen 15a gehalten wird.

## Patentansprüche

1. Gehäuse mit einer auf einer Basisplatte angeordneten zentralen Halteanordnung (12) für mindestens zwei aufeinanderliegende, mit jeweils einer Zentralöffnung (18) versehene Informationsplatten (14, 16), z.B. CD's, dadurch gekennzeichnet,
a) daß die Halteanordnung aus kreisförmig angeordneten, in die Zentralöffnungen (18) eingreifenden, radial federnden Klemmstegen (13, 15) gebildet ist und
b) daß mindestens zwei Gruppen von unabhängigen Klemmstegen (13, 15) mit jeweils in unterschiedlichen Ebenen angeordneten Klemmflächen (13a, 15a) zur Klemmung jeweils eines Informationsträgers (14, 16) vorgesehen sind.

2. Gehäuse nach Anspruch 1, dadurch gekennzeichnet, daß die jeweils in einer besonderen Ebene liegenden Klemmflächen (13a, 15a) in Richtung auf die Basisplatte (10) derart verjüngt ausgebildet sind, daß der größte Außendurchmesser (D₁, D₃) der kreisförmig angeordneten Klemmflächen (13a, 15a) etwas größer ist als der Durchmesser der Zentralöffnung (18) der jeweils geklemmten Informationsplatte (14, 16).

3. Gehäuse nach Anspruch 2, dadurch gekennzeichnet, daß die an die jeweiligen Klemmflächen (13a, 15a) einer Gruppe von Klemmelementen angrenzenden Flächen (13b, 15b) der Klemmstege (13, 15) rechtwinklig zur Basisplatte (10, 17) verlaufen und daß deren Außendurchmesser (D₂, D₄) etwas kleiner ist als der Durchmesser (18a) der Zentralöffnungen (18) der Informationsplatten (14, 16).

4. Gehäuse nach einem der Ansprüche 1 bis 3, dadurch gekennzeichnet, daß am Ende der Klemmflächen (13a, 15a) einer Gruppe von Klemmstegen (13, 15) radiale Verdickungen (13c, 15c) vorgesehen sind, deren Durchmesser etwas größer ist als der Durchmesser der Zentralöffnungen (18) der Informationsplatten (14, 16).

5. Gehäuse nach einem der Ansprüche 1 bis 4, dadurch gekennzeichnet, daß bei zwei oder mehr Gruppen von unterschiedlichen Klemmstegen (13, 15) die Klemmstege der einzelnen Gruppen nacheinander abwechselnd am kreisförmigen Umfang verteilt angeordnet sind.

6. Gehäuse nach einem der Ansprüche 1 bis 5, gekennzeichnet durch eine Anwendung bei einem handelsüblichen Gehäuse mit einem Bodenteil (20), einem gelenkig am Bodenteil (20) schwenkbar angeordneten Deckelteil (21) und einem in das Bodenteil (20) einsetzbaren Tray (22), wobei unter Beibehaltung der Außenabmessungen des Gehäuses das Tray (22) als Basisplatte mit der zentralen Halteanordnung (12) ausgebildet ist.

7. Gehäuse nach Anspruch 6, dadurch gekennzeichnet, daß das Tray (22) unter Wegfall einer erhöhten Mittenauflage mit einer ebenen Auflagefläche (22a) für den unten liegenden Informationsträger (23) und mit einer ebenen Außenfläche (22b) zur Auflage auf dem Bodenteil (20) versehen ist (Fig. 4).

8. Gehäuse nach Anspruch 7, dadurch gekennzeichnet, daß zusätzlich die Klemmstege der Klemmanordnung (12') in Richtung auf das Deckelteil (21) verlängert sind (Fig. 5).

9. Gehäuse nach einem der Ansprüche 1 bis 5, gekennzeichnet durch eine Anwendung bei einem handelsüblichen Gehäuse mit einem Bodenteil (20') und einem am Bodenteil (20') schwenkbar befestigten Deckelteil (21), wobei das Bodenteil (20') bei unveränderten Abmessungen des Gehäuses als Basisplatte mit einer zentralen Halteanordnung (12") ausgebildet ist und wobei die von der Basisplatte ausgehenden Klemmstege der Halteanordnung (12") bis kurz unter das Deckelteil (21) ragen (Fig. 6).

10. Gehäuse nach einem der Ansprüche 1 bis 9, dadurch gekennzeichnet, daß das Tray (22) eine umlaufende Erhöhung (22c) (Ring/Schräge) zur Abstützung des aufliegenden Informationsträgers (23) besitzt.

11. Gehäuse nach einem der Ansprüche 1 bis 4, gekennzeichnet durch eine Anwendung bei einem handelsüblichen Gehäuse mit einem Mittelstück (37), mit zwei daran schwenkbar befestigten, gleichartig ausgebildeten Deckelteilen (38) und mit je einem in die Deckelteile (38) einsetzbaren Tray (39), wobei unter Beibehaltung der Außenabmessungen des Gehäuses die beiden Trays (39) als Basisplatten mit jeweils einer zentralen Halteanordnung (12) ausgebildet sind.

12. Gehäuse nach Anspruch 11, dadurch gekennzeichnet, daß die Trays (39) unter Wegfall einer erhöhten Mittenauflage jeweils mit einer ebenen Auflagefläche (39a) für den unten liegenden Informationsträger (40, 42) und mit einer ebenen Außenfläche (39b) zur Auflage auf dem Deckelteil (38) versehen sind.

13. Gehäuse nach Anspruch 1, dadurch gekennzeichnet, daß mindestens ein Teil der Klemmstege (15) unter Beibehaltung ihrer radialen Federung an den freien Enden fest miteinander verbunden ist.

14. Gehäuse nach Anspruch 13, dadurch gekennzeichnet, daß die Klemmstege (15) der Gruppe mit den am weitesten außen liegenden Klemmflächen (15a) miteinander verbunden sind.

15. Gehäuse nach Anspruch 13 oder 14, dadurch gekennzeichnet, daß die Klemmstege (15) über elastische Verbindungsstege (47) mit einer Platte (19) verbunden sind und daß die elastischen Verbindungsstege (47) ein Well- oder S-Profil aufweisen.

16. Gehäuse nach Anspruch 15, dadurch gekennzeichnet, daß die Klemmstege (15), gegebenenfalls einschließlich der elastischen Verbindungsstege (47), einteilig mit der Platte (19) ausgebildet sind.

## Claims

1. A housing with a central retaining device (12) for at least two information discs (14,16), for example CDs, lying one above the other and each provided with a central opening (18), which retaining device is arranged on a base plate, characterized in that
a) the retaining device is built up from clamping studs (13,15) which are arranged in a circle, grip into the central openings (18), and are resilient in radial direction, and
b) at least two groups of independent clamping studs (13,15) are provided, each group with clamping surfaces (13a,15a) arranged in a different plane for clamping a respective information carrier (14,16).

2. A housing as claimed in claim 1, characterized in that the clamping surfaces (13a,15a) each lying in an individual plane are given a tapering shape in the direction of the base plate (10) such that the greatest outer diameter (D₁,D₃) of the clamping surfaces (13a,15a) arranged in a circle is slightly greater than the diameter of the central opening (18) of the relevant clamped information disc (14,16).

3. A housing as claimed in claim 2, characterized in that the surfaces (13b,15b) of the clamping studs (13,15) adjoining the clamping surfaces (13a,15a) of a group of clamping elements extend perpendicularly to the base plate (10,17), and the outer diameter (D₂,D₄) of said surfaces is somewhat smaller than the diameter (18a) of the central openings (18) of the information discs (14,16).

4. A housing as claimed in any one of claims 1 to 3, characterized in that radial ridges (13c,15c) of a diameter somewhat greater than the diameter of the central openings (18) of the information discs (14,16) are provided at the ends of the clamping surfaces (13a,15a) of a group of clamping studs (13,15).

5. A housing as claimed in any one of claims 1 to 4, characterized in that the clamping studs (13,15) of the individual groups from among two or more groups of different clamping studs are arranged one after the other in regular alternation distributed over the circular circumference.

6. A housing as claimed in any one of claims 1 to 5, characterized by its use as a commercially usual housing with a bottom part (20), a lid (21) hinged to the bottom part (20), and a tray (22) which can be inserted into the bottom part (20), which tray (22) is formed so as to serve as the base plate with the central retaining device (12) while the outer dimensions of the housing remain unchanged.

7. A housing as claimed in claim 6, characterized in that the tray (22) is provided with a plane support surface (22a) for the bottom information carrier (23) and a plane outer surface (22b) for resting against the bottom part (20), while a raised central support surface is dispensed with (Fig.4).

8. A housing as claimed in claim 7, characterized in that in addition the clamping studs of the retaining device (12') are lengthened in the direction of the lid (21) (Fig. 5).

9. A housing as claimed in any one of claims 1 to 5, characterized by its use as a commercially usual housing with a bottom part (20') and a lid (21) hinged to the bottom part (20'), which bottom part (20') is formed so as to serve as the base plate with a central retaining device (12") while the dimensions of the housing remain unchanged, and the clamping studs of the retaining device (12") starting from the base plate extend to just below the lid (21) (Fig. 6).

10. A housing as claimed in any one of claims 1 to 9, characterized in that the tray (22) has a circumferential elevation (22c) (ring/bevel) for supporting the information carrier (23) lying thereon.

11. A housing as claimed in any one of claims 1 to 4, characterized by its use as a commercially usual housing with a central piece (37), with two identical lid parts (38) hinged thereto, and with trays (39) which can be inserted into each of the lid parts (38), both trays (39) being formed as base plates each with a central retaining device (12) while the outer dimensions of the housing remain unchanged.

12. A housing as claimed in claim 11, characterized in that the trays (39) are each provided with a plane support surface (39a) for the bottom information carrier (40, 42) and with a plane outer surface (39b) for resting against the lid part (38), while a raised central support is dispensed with.

13. A housing as claimed in claim 1, characterized in that at least part of the clamping studs (15) are fixedly interconnected at their free ends while retaining their radial resilience.

14. A housing as claimed in claim 13, characterized in that those clamping studs (15) of the group are interconnected whose clamping surfaces (15a) lie farthest to the outside.

15. A housing as claimed in claim 13 or 14, characterized in that the clamping studs (15) are connected to a plate (19) via elastic connection bridges (47), and in that the elastic connection bridges (47) have an undulating profile or S-profile.

16. A housing as claimed in claim 15, characterized in that the clamping studs (15), possibly in conjunction with the elastic connection bridges (47), are integral with the plate (19).

## Revendications

1. Boîtier avec un dispositif de retenue central disposé sur une plaque de base pour au moins deux disques d'information (14, 16) superposés dotés respectivement d'une ouverture centrale (18), par exemple des CD, caractérisé en ce
a) que le dispositif de retenue est formé de nervures de blocage (13, 15) élastiques radialement, entrant en prise dans les ouvertures centrales (18) et disposées circulairement et
b) qu'au moins deux groupes de nervures de blocage indépendantes (13, 15) sont prévus avec respectivement des surfaces de blocage (13a, 15a) disposées dans des plans différents en vue du blocage d'un support d'information respectif (14, 16).

2. Boîtier selon la revendication 1, caractérisé en ce que les surfaces de blocage (13a, 15a) disposées respectivement dans un plan particulier sont de conception effilée dans la direction de la plaque de base (10) de telle sorte que le diamètre externe maximal (D1, D3) des surfaces de blocage (13a, 15a) disposées circulairement soit légèrement supérieur au diamètre de l'ouverture centrale (18) du disque d'information respectivement bloqué (14, 16).

3. Boîtier selon la revendication 2, caractérisé en ce que les surfaces adjacentes aux surfaces de blocage (13a, 15a) respectives d'un groupe d'éléments de blocage (13b, 15b) des nervures de blocage (13, 15) sont perpendiculaires à la plaque de base (10, 17) et que leur diamètre extérieur (D2, D4) est légèrement inférieur au diamètre (18a) des ouvertures centrales (18) des disques d'information (14, 16).

4. Boîtier selon l'une des revendications 1 à 3, caractérisé en ce qu'à l'extrémité des surfaces de blocage (13a, 15a) d'un groupe de nervures de blocage (13, 15) sont prévus des épaississements radiaux (13c, 15c) dont le diamètre est légèrement supérieur au diamètre des ouvertures centrales (18) des disques d'information (14, 16).

5. Boîtier selon l'une des revendications 1 à 4, caractérisé en ce que, pour deux groupes ou plus de nervures de blocage différentes (13, 15), les nervures de blocage des différents groupes sont successivement réparties en alternance sur la périphérie circulaire.

6. Boîtier selon l'une des revendications 1 à 5, caractérisé par une application pour un boîtier du commerce avec une pièce de fond (20), une pièce de couvercle (21) articulée à pivotement sur la pièce de fond (20) et un plateau (22) à insérer dans la pièce de fond (20), le plateau (22) étant conçu comme une plaque de base avec le dispositif de retenue central (12) en maintenant les dimensions extérieures du boîtier.

7. Boîtier selon la revendication 6, caractérisé en ce que le plateau (22) est doté d'une surface d'application plane (22a) sans appui central surélevé pour le disque d'information (23) inférieur et d'une surface externe plane (22b) pour l'application sur la pièce de fond (20) (Fig. 4).

8. Boîtier selon la revendication 7, caractérisé en ce qu'en plus, les nervures de blocage du dispositif de blocage (12') sont prolongées dans la direction de la pièce de couvercle (21) (Fig. 5).

9. Boîtier selon l'une des revendications 1 à 5, caractérisé par une application pour un boîtier du commerce avec une pièce de fond (20') et une pièce de couvercle (21) fixée à pivotement sur la pièce de fond (20'), la pièce de fond (20') étant conçue comme une plaque de base avec un dispositif de retenue central (12") pour des dimensions inchangées du boîtier et les nervures de blocage du dispositif de retenue (12") sortant de la plaque de base débordant légèrement sous la pièce de couvercle (21) (Fig. 6).

10. Boîtier selon l'une des revendications 1 à 9, caractérisé en ce que le plateau (22) possède un surélèvement circulaire (22c) (anneau, biseau) en vue de l'appui du support d'information appliqué (23).

11. Boîtier selon l'une des revendications 1 à 4, caractérisé par une application pour un boîtier du commerce avec une pièce centrale (37), avec deux pièces de couvercle (38) de conception similaire fixées à pivotement à celle-ci et avec respectivement un plateau (39) à insérer dans les pièces de couvercle (38), et les deux plateaux (39) étant conçus comme des plaques de base avec respectivement un dispositif de retenue central (12) en maintenant les dimensions extérieures du boîtier.

12. Boîtier selon la revendication 11, caractérisé en ce que les plateaux (39) sont dotés d'une surface d'application plane (39a) sans appui central surélevé pour le disque d'information inférieur (40, 42) et avec une surface externe plane (39b) en vue de l'application sur la pièce de couvercle (38).

13. Boîtier selon la revendication 1, caractérisé en ce qu'au moins une partie des nervures de blocage (15) sont reliées fermement entre elles en préservant leur élasticité radiale aux extrémités libres.

14. Boîtier selon la revendication 13, caractérisé en ce que les nervures de blocage (15a) du groupe avec les surfaces de blocage 15a à l'extrémité extérieure sont reliées entre elles.

15. Boîtier selon l'une des revendications 13 ou 14, caractérisé en ce que les nervures de blocage (15) sont reliées par l'intennédiaire de nervures de liaison élastiques (47) avec une plaque (19) et que les nervures de liaison élastiques (47) présentent un profil ondulé ou en S.

16. Boîtier selon la revendication 15, caractérisé en ce que les nervures de blocage (15) , éventuellement avec les nervures de liaison élastiques (47), sont conçues en une seule pièce avec la plaque (19).
